# DEMANDE DE BREVET EUROPEEN

(11) **EP 1 126 370 A1**
(43) Date de publication de la demande: **22.08.2001**
(21) Numéro de dépôt: 01400377.6
(22) Date de dépôt: 13.02.2001
(51) Int. Cl.: G06F 9/46, G07F 17/30

(54) **Procédé de réception de fichiers lors d'un téléchargement**

(30) Priorité: 16.02.2000 FR 0001907
(71) Demandeur: TOUCHTUNES MUSIC CORPORATION, Las Vegas, NV 89104 (US)
(72) Inventeur: Nathan, Guy, Nun's Island, Quebec H3E 1H7 (CA); Phillips, Ken, Montreal, Quebec H3H 2H8 (CA); Dion, Dominique, Quebec, Canada H3E 1M2 (CA); Khenfir, Mounir, Montreal, Quebec H3V 1B4 (CA)
(74) Mandataire: Debay, Yves

(57) **Abrégé**

Procédé de réception de fichiers envoyés par un serveur central vers un système de reproduction d'informations audiovisuelles, géré par un système d'exploitation et relié au serveur, par l'intermédiaire d'une liaison de transfert de données, caractérisé en ce que le procédé comprend :
- une étape d'initialisation d'une liaison entre le serveur central et un système de reproduction d'informations audiovisuelles,
- une étape de mémorisation des fichiers transmis par le serveur central sur des moyens de mémorisation du système de reproduction d'informations audiovisuelles, chaque fichier comprenant une information déterminée représentative du type de données contenues dans le fichier,
- une étape de recherche, pour chaque fichier reçu, d'une fonction de réception spécifique, cette étape de recherche étant réalisée par l'intermédiaire de l'information déterminée représentative du type de données contenues dans le fichier,
- une étape de traitement de chaque fichier par la fonction de réception correspondante, le traitement comprenant la copie du fichier reçu dans une zone de mémorisation déterminée.

## Description

La présente invention concerne un procédé de réception de fichiers mis en oeuvre sur un système de reproduction d'informations audiovisuelles.

Il est connu dans l'art antérieur des procédés de réception de fichiers comprenant une première étape dans laquelle le ou les fichiers reçus sont mémorisés dans un fichier situé dans un espace de mémorisation temporaire. Ensuite, une procédure particulière vérifie si le ou les fichiers reçus correspondent au(x) fichier(s) attendu(s). Si tel est le cas, en fonction du type de fichier, les fichiers reçus sont copiés dans un espace déterminé de mémorisation permanente.

La présente invention a donc pour objet de pallier les inconvénients de l'art antérieur en proposant un procédé de réception de fichier ne nécessitant plus de mémorisation temporaire de fichiers.

Ce but est atteint par un procédé de réception selon la revendication 1.

Un autre but de l'invention est atteint par un procédé de téléchargement de fichiers selon la revendication 2.

Des développements supplémentaires de l'invention sont décrits dans les revendications 3 à 6.

L'invention, avec ses caractéristiques et avantages, ressortira plus clairement à la lecture de la description faite en référence aux dessins annexés dans lesquels :
- la figure 1 représente un logigramme du procédé de réception de fichier selon l'invention,
- la figure 2 représente un logigramme d'une fonction de réception d'un fichier représentatif d'une chanson,
- la figure 3 représente un logigramme d'une fonction de réception d'un fichier représentatif d'une couverture d'album.

Le procédé de réception de fichiers selon l'invention est mis en oeuvre par un système de reproduction d'informations audiovisuelles du type de celui décrit dans la demande de brevet européen N°99 401 785.3. Selon cette demande de brevet européen, le système de reproduction comprend essentiellement une unité centrale gérant par l'intermédiaire d'une pluralité d'interfaces et d'un système d'exploitation, la reproduction de son, la visualisation d'images, la sélection de chansons, et une liaison avec un serveur distant de distribution d'informations audiovisuelles. Le système d'exploitation est organisé en modules hiérarchisés gérant chacun une fonctionnalité particulière du système de reproduction d'informations audiovisuelles.

Le système d'exploitation d'un tel système de reproduction d'informations audiovisuelles gère également une base de données. Cette base de données contient des informations relatives aux fichiers mémorisés sur les moyens de mémorisation du système de reproduction. Ces fichiers représentent notamment, soit les informations digitalisées constituant des chansons, soit les informations graphiques représentant la couverture des albums dont sont extraites les chansons, soit des animations (clip vidéo ou publicité). A titre d'exemple, il existe au moins deux types de fichiers graphiques. Le premier type de fichier graphique représente la couverture de l'album selon un petit format. Ce premier type de fichier graphique est utilisé lors de l'exploration par un client de la liste des chansons disponible sur le système de reproduction. Le deuxième type de fichiers représente la couverture de l'album selon un grand format. Ce deuxième type de fichier est utilisé lorsque le client a sélectionné une chanson tirée de l'album correspondant à la couverture. Un troisième type de fichier peut être un clip vidéo, ou une publicité, ou une enquête. La différenciation entre les différents types de fichiers, fichiers de chansons, fichiers graphiques du premier et du deuxième types, est réalisée à partir d'une extension de fichiers différente pour chaque type de fichier.

Les informations contenues dans la base de données permettent de déterminer les liens existant entre les fichiers de chanson et les fichiers graphiques associés, de sorte que tout fichier de chanson soit associé à au moins un fichier graphique. Par contre, il se peut que des fichiers graphiques représentant la couverture de l'album ne soient associés à aucun fichier de chansons. Cela signifie que les chansons de l'album représenté par la couverture ne sont pas mémorisées sur le système de reproduction mais peuvent être commandées afin d'être téléchargées sur les moyens de mémorisation du système de reproduction. De même, de nouvelles chansons avec leur pochette d'album correspondante peuvent être commandées afin d'être téléchargées sur les moyens de mémorisation du système de reproduction. C'est lors du téléchargement des fichiers correspondant aux chansons ou aux pochettes d'album que le procédé selon l'invention est mis en oeuvre.

Lors de la commande de nouvelles chansons effectuée à partir d'un système de reproduction d'informations audiovisuelles, le système d'exploitation du système de reproduction vérifie si pour la nouvelle chanson, un fichier graphique, représentant la couverture de l'album, est déjà mémorisé sur les moyens de mémorisation. Si tel n'est pas le cas, le ou les fichiers graphiques correspondants sont également commandés. Pour chaque fichier commandé, une fonction destinée au traitement et à la manipulation du fichier commandé est créée par un module du système d'exploitation supervisant le type de fichier commandé. Ainsi, le système d'exploitation comprend un premier module gérant les fichiers de chansons, un deuxième module gérant les fichiers graphiques du premier type, un troisième module gérant les fichiers graphiques du deuxième type et d'autres modules gérant les autres types de fichiers. Par la suite, on ne décrira le fonctionnement qu'avec trois types de fichiers différents. Cependant, cela ne doit pas constituer une limitation de la présente invention. Ainsi, lors de la commande, par exemple d'un fichier de chansons déterminé, le premier module crée une fonction spécifique de réception pour les fichiers de chansons commandés. Pour ce faire, la base de données comprend le nom de tous les fichiers de toutes les chansons disponibles sur le système de reproduction et le nom de tous les fichiers de toutes les chansons téléchargeables. Ainsi, pour chaque fichier commandé, la fonction de réception est créée.

De même, les premier, deuxième et troisième modules comprennent une fonction créant une fonction de réception dite standard permettant de prendre en compte la réception d'un fichier de chansons ou un fichier graphique du premier ou du deuxième type. Ainsi, même si un fichier, par exemple de chansons n'a pas été commandé directement par l'intermédiaire du système de reproduction, mais par d'autres moyens tels que, par exemple, le serveur ou un site Internet connecté au serveur, la réception de ce fichier peut être prise en compte par le système de reproduction.

Lorsqu'une commande d'un fichier est validée, un quatrième module du système d'exploitation prend en charge la gestion de la liaison avec le serveur distant. Pour cela, dès qu'une communication est établie avec le serveur, le quatrième module crée un fichier spécifique comportant l'identification de tous les fichiers commandés sur le système de reproduction. Après vérification par le serveur de droits éventuels autorisant ou non le téléchargement de fichiers sur le système de reproduction, les fichiers demandés sont envoyés vers le système de reproduction demandeur. Les fichiers sont transmis par paquets de données.

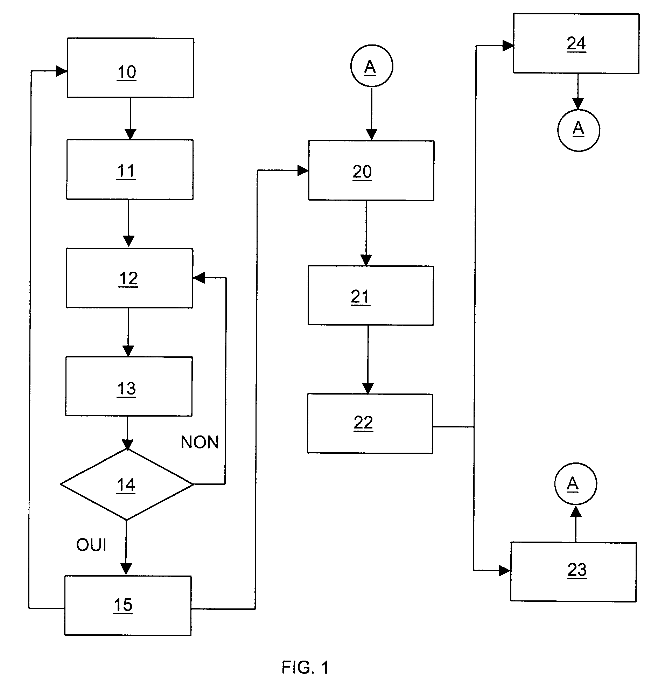

La figure 1 représente un logigramme du procédé de réception de fichiers selon l'invention. Selon le procédé de l'invention, une première étape (10) consiste à initialiser la communication entre le serveur et le système de reproduction pour effectuer le transfert de fichiers. Ensuite, le procédé comprend une étape (11) d'ouverture d'un fichier de réception sur les moyens de mémorisation. Selon l'invention, la zone de mémorisation choisie est une zone de mémorisation permanente dont l'espace disponible est de taille minimum déterminée. Ainsi, contrairement à l'art antérieur, les données ne sont pas mémorisées dans une zone de mémorisation temporaire spécifique, mais dans une zone quelconque des moyens de mémorisation, à condition que cette zone ait une taille minimum déterminée. A l'issue de l'ouverture du fichier, lors d'une troisième étape (12), un module dit de télécommunication du système d'exploitation, se met en attente d'un paquet de données.

Ensuite, lors d'une étape de réception (13), les données contenues dans le paquet reçu sont copiées dans le fichier ouvert. Une étape (14) de vérification contrôle si le paquet qui vient d'être copié est le dernier paquet du fichier en cours de réception. Tant que le dernier paquet du fichier en cours de réception n'est pas reçu, tous les paquets de données d'un même fichier sont copiés dans le fichier préalablement ouvert. Lorsque le dernier paquet de données du fichier est détecté lors de l'étape (14) de vérification, le module de télécommunication du système d'exploitation crée, lors d'une sixième étape (15), une notification qu'il transmet ensuite au quatrième module gérant la liaison avec le serveur. Cette notification informe le quatrième module qu'un nouveau fichier a été reçu. Dès réception de cette notification, le quatrième module passe d'une étape (20) d'attente à une étape de recherche (21) dans l'ensemble des fonctions de réception créées, si l'une d'entre elles concerne le fichier reçu. De même, le quatrième module recherche également si une fonction de réception standard existe;

La recherche s'effectue par l'intermédiaire du nom du fichier reçu et/ou par l'intermédiaire de son extension. En effet, chaque fonction de réception est spécifique, soit à un fichier précis, soit à un type de fichiers. Par conséquent, à partir du nom ou de l'extension du fichier reçu, la fonction de réception associée peut facilement être retrouvée par le quatrième module. Lorsque le quatrième module trouve la fonction correspondant au fichier reçu, celle-ci est alors déclenchée lors d'une neuvième étape (22) pour provoquer le traitement de ce nouveau fichier. Pour chaque fichier concernant une chanson, une première fonction de réception est déclenchée lors d'une dixième étape (24), et pour chaque fichier concernant une image, une deuxième fonction de réception est déclenchée lors d'une onzième étape (23). Le traitement d'un fichier de chansons ou d'un fichier images consiste essentiellement à copier le fichier reçu dans une zone mémoire appropriée puis à mettre à jour la base de données du système de reproduction. Si aucune fonction de réception n'est trouvée par le quatrième module du système de reproduction, le processus est arrêté et aucune autre action ou manipulation n'est réalisée sur le fichier reçu.

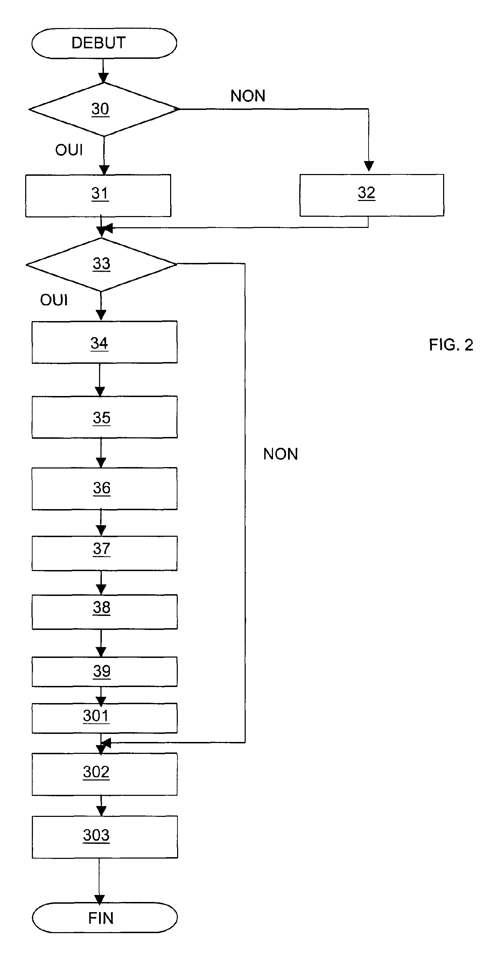

La figure 2 représente le logigramme d'une fonction de réception d'un fichier représentatif d'une chanson. Dans une première étape (30), la fonction de réception vérifie dans la base de données du système de reproduction si le fichier existe déjà. S'il existe, le nouveau fichier est copié sur l'ancien dans une deuxième étape (31), de sorte que l'ancien soit supprimé, si le fichier n'existe pas, le nouveau fichier est mémorisé, dans une troisième étape (32), dans une zone appropriée des moyens de mémorisation, par exemple dans un répertoire particulier. Ensuite, la fonction vérifie, dans une quatrième étape (33), si la copie du nouveau fichier est correctement réalisée. Si cela n'est pas le cas, la fonction provoque, dans une cinquième étape (302), la suppression du fichier reçu. Si la copie du nouveau fichier est correcte, la fonction de réception provoque une mise à jour de la base de données. Cette mise à jour comprend dans une sixième étape (34) la recherche, dans le fichier reçu des informations pour la mise à jour de la base de données. Ensuite, à partir des informations trouvées, la fonction de réception vérifie, dans une septième étape (35), que les fichiers graphiques associés existent. De même, la fonction de réception vérifie si les versions du fichier de chansons et des fichiers graphiques associés sont compatibles entre elles et avec la version du système d'exploitation. Dans le cas contraire, le système d'exploitation n'est pas mis à jour ou les nouveaux fichiers graphiques sont commandés, par exemple, selon le procédé enseigné dans la demande de brevet européen N°99 401 785.3.

Ensuite, dans une huitième étape (36), la fonction de réception met à jour la base de données pour prendre en compte les fichiers graphiques associés. Dans une neuvième étape (37), la fonction de réception ajoute dans une table d'événements de la base de données du système de reproduction qu'un nouveau fichier de chansons a été reçu.

Dans une dixième étape (38), la fonction de réception met à jour un fichier mémorisé sur le système de reproduction et comprenant l'identification de toutes les chansons disponibles sur le système de reproduction. L'identification de chaque chanson est par exemple réalisée par l'intermédiaire d'un numéro unique. Ce fichier est utilisé par le serveur pour connaître sur chaque système de reproduction connecté au serveur la liste des chansons disponibles. Ainsi, le serveur peut connaître la liste des chansons présentes sur un système de reproduction en demandant, lors d'une communication avec le système de reproduction, que ce dernier transmette le fichier contenant la liste des chansons. Ainsi, le serveur n'a plus qu'à extraire de ce fichier les numéros de chansons contenus pour connaître les chansons disponibles sur le système de reproduction.

Dans une onzième étape (39), la fonction de réception ajoute une entrée dans une table de statistiques de la base de données du système de reproduction. Cette table de statistiques permet de déterminer combien de fois est sélectionnée la chanson correspondant au nouveau fichier reçu. Dans une douzième étape (301), la fonction de réception met à jour une table d'achats de la base de données du système de reproduction. Cette table d'achats est utilisée, par exemple pour vérifier que le nombre de chansons commandées est inférieur à un nombre déterminé ou bien pour réaliser une facturation des chansons commandées. Ensuite la fonction de réception effectue la cinquième étape (302) correspondant à la suppression du fichier reçu à son emplacement d'origine. En effet, le fichier reçu lors de la deuxième (31),ou troisième étape (32) a été copié dans une zone mémoire déterminée. Par conséquent, le fichier reçu a été conservé sur son emplacement initial durant toutes les étapes de mise à jour de la base de données. A l'issue de cette mise à jour, la version initiale n'a plus d'utilité et peut par conséquent être supprimée. La fonction de réception s'achève par une treizième étape (303) de mise à jour du nombre de chansons sélectionnables par un client sur le système de reproduction. Ce nombre est mémorisé sur les moyens de mémorisation du système pour être comparé à un seuil déterminé. Lorsque le nombre est égal au seuil, cela signifie que le système de reproduction comprend un nombre maximum de chansons sélectionnables et qu'il n'est donc plus possible d'en commander d'autres sans préalablement procéder à l'effacement d'au moins une chanson existante.

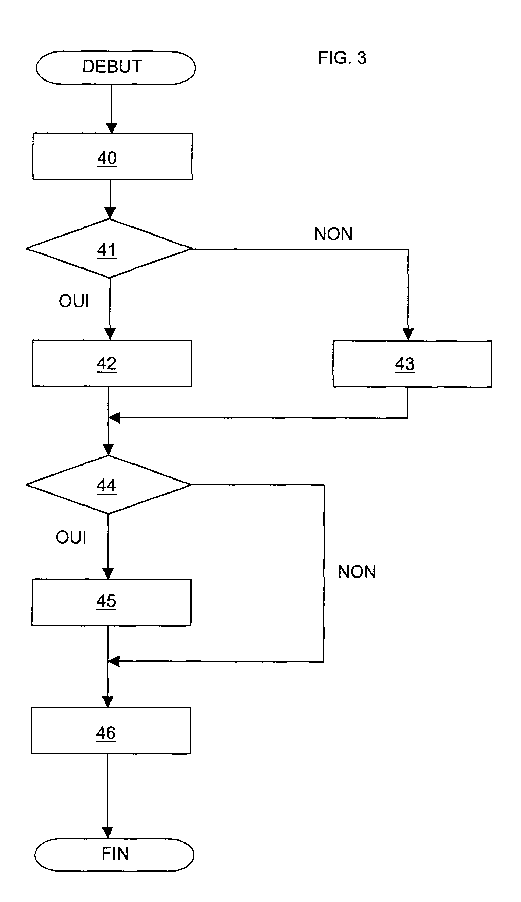

La figure 3 représente le logigramme d'une fonction de réception d'un fichier représentatif d'une couverture d'album. Selon l'invention, le traitement des fichiers graphiques du premier et du deuxième types est identique. La fonction de réception d'un fichier graphique vérifie, dans une première étape (40) l'intégrité du fichier reçu. Dans une deuxième étape (41), la fonction de réception vérifie dans la base de données du système de reproduction si le fichier graphique existe déjà. S'il existe, le nouveau fichier est copié, lors d'une troisième étape (42), sur l'ancien fichier, de sorte que cet ancien fichier soit supprimé. Si le fichier n'existe pas, le nouveau fichier graphique est copié, lors d'une quatrième étape (43) dans une zone appropriée des moyens de mémorisation, par exemple dans un répertoire particulier. Ensuite, la fonction vérifie, dans une cinquième étape (44), si la copie du nouveau fichier est correctement réalisée. Si cela n'est pas le cas, la fonction provoque, dans une sixième étape (46), la suppression du fichier reçu. Si la copie du nouveau fichier est correcte, la fonction de réception provoque, dans une septième étape (45) une mise à jour de la base de données. Cette mise à jour consiste à indiquer le nom du nouveau fichier graphique, ainsi que les chansons auxquelles il est associé, c'est-à-dire les chansons appartenant à l'album représenté par le fichier graphique. L'ensemble de ces informations est soit disponible dans le fichier graphique, soit disponible dans une table d'archivage de la base de données.

Ainsi, le procédé de réception de fichiers selon l'invention se caractérise en ce qu'il comprend :
- une étape d'initialisation d'une liaison entre le serveur central et un système de reproduction d'informations audiovisuelles,
- une étape de mémorisation des fichiers transmis par le serveur central sur des moyens de mémorisation du système de reproduction d'informations audiovisuelles, chaque fichier comprenant une information déterminée représentative du type de données contenues dans le fichier,
- une étape de recherche, pour chaque fichier reçu, d'une fonction de réception spécifique, cette étape de recherche étant réalisée par l'intermédiaire de l'information déterminée représentative du type de données contenues dans le fichier,
- une étape de traitement de chaque fichier par la fonction de réception correspondante, le traitement comprenant la copie du fichier reçu dans une zone de mémorisation déterminée.

Dans un autre mode de réalisation, l'étape de mémorisation consiste à ouvrir un fichier dans une zone de mémoire permanente quelconque ayant une zone disponible d'une valeur minimum déterminée, pour y écrire les données transmises.

Dans un autre mode de réalisation, l'étape de traitement comprend la mise à jour d'une base de données du système de reproduction d'informations audiovisuelles pour prendre en compte les informations contenues dans le fichier reçu.

Dans un autre mode de réalisation, l'étape de recherche est déclenchée dès que le dernier paquet de données correspondant à un fichier entier est mémorisé.

Dans un autre mode de réalisation, l'information déterminée comprend l'extension du fichier et/ou le nom du fichier reçu.

Dans un autre mode de réalisation, lorsque l'information déterminée est représentative d'un fichier de chansons, l'étape de mise à jour de la base de données comprend au moins l'une des étapes suivantes :
- une étape de vérification de la compatibilité de la version du fichier de chansons avec la version du système d'exploitation du système de reproduction,
- une étape de mise à jour d'un fichier mémorisé sur le système de reproduction qui contient l'identification de toutes les chansons mémorisées sur le système de reproduction,
- une étape de mise à jour d'une table de statistiques de la base de données permettant de déterminer la fréquence de sélection de la chanson correspondant au fichier mémorisé,
- une étape de mise à jour d'une table d'achat contenant le nombre et le nom de toutes les chansons achetées pour le système de reproduction,
- une étape de mise à jour d'un compteur de chanson sélectionnable pour vérifier que le nombre de chansons sélectionnables n'est pas supérieur à un seuil déterminé.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de réception de fichiers envoyés par un serveur central vers un système de reproduction d'informations audiovisuelles, géré par un système d'exploitation et relié au serveur, par l'intermédiaire d'une liaison de transfert de données, caractérisé en ce que le procédé comprend :
- une étape d'initialisation d'une liaison entre le serveur central et un système de reproduction d'informations audiovisuelles,
- une étape de mémorisation sur des moyens de mémorisation du système de reproduction d'informations audiovisuelles, des fichiers transmis par le serveur central, chaque fichier comprenant une information déterminée représentative du type de données contenues dans le fichier,
- une étape de recherche, pour chaque fichier reçu, d'une fonction de réception spécifique, cette étape de recherche étant réalisée par l'intermédiaire de l'information déterminée représentative du type de données contenues dans le fichier,
- une étape de traitement de chaque fichier par la fonction de réception correspondante, le traitement comprenant la copie du fichier reçu dans une zone de mémorisation déterminée.

2. Procédé de téléchargement de fichiers selon la revendication 1, caractérisé en ce que l'étape de mémorisation consiste à ouvrir un fichier dans une zone de mémoire permanente quelconque ayant une zone disponible d'une valeur minimum déterminée, pour y écrire les données transmises.

3. Procédé de téléchargement de fichiers selon la revendication 1 ou 2, caractérisé en ce que l'étape de traitement comprend la mise à jour d'une base de données du système de reproduction d'informations audiovisuelles pour prendre en compte les informations contenues dans le fichier reçu.

4. Procédé de téléchargement de fichiers selon l'une des revendications 1 à 3, caractérisé en ce que l'étape de recherche est déclenchée dès que le dernier paquet de données correspondant à un fichier entier est mémorisé.

5. Procédé de téléchargement de fichiers selon l'une des revendications 1 à 4, caractérisé en ce que l'information déterminée comprend l'extension du fichier et/ou le nom du fichier reçu.

6. Procédé de téléchargement de fichiers selon l'une des revendications 1 à 5, caractérisé en ce que lorsque l'information déterminée est représentative d'un fichier de chansons, l'étape de mise à jour de la base de données comprend au moins l'une des étapes suivantes :
- une étape de vérification de la compatibilité de la version du fichier de chansons avec la version du système d'exploitation du système de reproduction,
- une étape de mise à jour d'un fichier mémorisé sur le système de reproduction qui contient l'identification de toutes les chansons mémorisées sur le système de reproduction,
- une étape de mise à jour d'une table de statistiques de la base de données permettant de déterminer la fréquence de sélection de la chanson correspondant au fichier mémorisé,
- une étape de mise à jour d'une table d'achat contenant le nombre et le nom de toutes les chansons achetées pour le système de reproduction,
- une étape de mise à jour d'un compteur de chanson sélectionnable pour vérifier que le nombre de chansons sélectionnables n'est pas supérieur à un seuil déterminé.
